# EUROPEAN PATENT SPECIFICATION

(11) **EP 0 390 347 B1**
(45) Date of publication and mention of the grant of the patent: **27.11.1996**
(21) Application number: 90302310.9
(22) Date of filing: 05.03.1990
(51) Int. Cl.: G11B 5/187, G11B 5/31, G11B 5/265, G11B 5/245, G11B 5/09, H01F 41/14

(54) **Recording head to optimize high density recording**
Aufzeichnungskopf zum Optimieren der Aufzeichnung mit hoher Dichte
Tête magnétique pour optimiser l'enregistrement à haute densité

(30) Priority: 28.03.1989 US 329429
(43) Date of publication of application: 03.10.1990
(73) Proprietor: QUANTUM CORPORATION, Milpitas California 95035 (US)
(72) Inventor: Sidman, Alan Lee, Wellesley, Massachusetts 02181 (US)
(74) Representative: Goodman, Christopher

(56) References cited:
- EP-A- 0 012 913
- EP-A- 0 351 048
- EP-A- 0 356 126
- EP-A- 0 376 459
- DE-A- 3 806 171
- US-A- 4 621 045
- US-A- 4 947 541
- PATENT ABSTRACTS OF JAPAN vol. 12, no. 86 (P-677) 18 March 1988 & JP-A-62 219 218
- PATENT ABSTRACTS OF JAPAN vol. 7, no. 216 (P-225)(1361) 24 September 1983 & JP-A-58 111 114
- PATENT ABSTRACTS OF JAPAN vol. 12, no. 62 (P-670)25 February 1988 & JP-A-62 204 420
- PATENT ABSTRACTS OF JAPAN vol. 12, no. 288 (P-741)(3135) 8 August 1988 & JP-A-63 064 613

## Description

### Background of the Invention

The present invention relates to design of a magnetic recording head which optimizes high density longitudinal recording.

A magnetic recording head produces a magnetic field which has transverse, vertical, and longitudinal components. The longitudinal component is directed along the recording medium direction of motion, the vertical component is normal to the plane of the medium, and the transverse component is oriented along the track width direction. Recording heads are ordinarily designed such that the strength of the head field at the medium mid-plane directly beneath the gap center line of the head is about two to three times the value of the medium coercivity, where coercivity is the amount of field strength necessary to switch the orientation of the magnetization in the medium. A track is created during the head write cycle by the downstream magnetic field of the head where it equals the coercivity threshold of the medium. when a data bit is written, the medium magnetic orientation is reversed on the track at an assigned location. Each of the sections of the medium where the magnetization has been reversed is referred to individually as a "transition". The width of the track defined on the recording medium will be approximately equal to the width of the head gap.

A typical recording head will include two pole pieces with the gap defined therebetween. The actual recording of a transition occurs somewhat downstream along the direction of the moving medium, approximately 0.25 microns into the second pole piece in the longitudinal direction.

The transverse field component from the head is comparable in magnitude to the longitudinal field component at the sides of the head, the latter known as the fringe zones. for thin film media, the two in-plane components of the head field, i.e. the transverse and longitudinal components, add vectorially in their impact on the transition. In the midsection of the track, only the longitudinal field exists and hence it produces an essentially straight line transition perpendicular to the direction of medium movement. However, the recorded transition is not parallel to the gap in the fringe zones because of the varying degrees of interaction between the two in-plane components. In fact, at the fringe zones the transition will be perturbed at its ends where hooks are defined protruding further into the downstream section of the medium. These hooks cause inter-symbol interference during the writing of closely spaced bits and can cause lateral asymmetry in the readback pulse. In addition, the medium coercivity may be degraded when the perpendicular (vertical) component of the head field that is imposed upon the medium is large.

In the known processes used to manufacture recording heads of the type discussed above, the second pole is normally configured to be as wide as or about one to three microns narrower than the first pole at the gap. Such designs suffer from the fringe zone and vertical field effects problems discussed above during longitudinal recording on thin film media.

A particular problem in the manufacture of recording heads in which the second pole is of similar width or greater width than the first pole is satisfactorily providing a gap layer extending over and possibly beyond the sides of the first pole. In such arrangements, thinning of the gap layer at the side corners of the pole during gap layer formation can occur.

In JP-62 219 218 there is described a process in which a gap layer is deposited over first pole tip in a non-planar fashion. After the gap material is deposited, an organic layer is deposited over the structure and is planarized to expose a portion of the gap layer. The second pole tip is then deposited over the exposed gap film and the planarizing portion of the organic layer. This arrangement does not, however, resolve the problems of thinning of the gap layer over the corners of the first pole.

In JP-62 204 420 there is described a process in which a gap layer is deposited over a planarized structure which includes a first pole and planarizing inorganic insulating layer. In this process, however, the inorganic insulting layer is deposited as a complete covering layer on the substrate carrying the first pole, and is then ground back until the first magnetic pole is exposed.

This is also described in EP-A-0 351 048, which is, however, relevent only under Art.54(3) EPC.

In JP-63 64613 there is described a process in which a gap layer is deposited over a planarized structure which includes a first pole and planarizing non-magnetic material. In this process, however, the non-magnetic material is patterned with photoresist coincident with the edges of the first pole, and the non-magnetic material thereby etched back to expose the first pole.

The present invention provides a method for forming a thin film head according to claim 1.

### Brief Description of the Drawings

Fig. 1 is a graphical representation of a typical waveform generated by a thin film recording head reading a transition from a magnetic storage medium.

Fig. 2 is a graphical representation of the vectorial sum of the in-plane magnetic field components from different head pole tip geometries, as experienced at the medium mid-surface.

Fig. 3 is a cross-sectional schematic view of a preferred embodiment of the present invention.

Fig. 4A-D show in cross-sectional view the process of planarization of P1 pole in practice of the invention.

### Description of the Preferred Embodiment

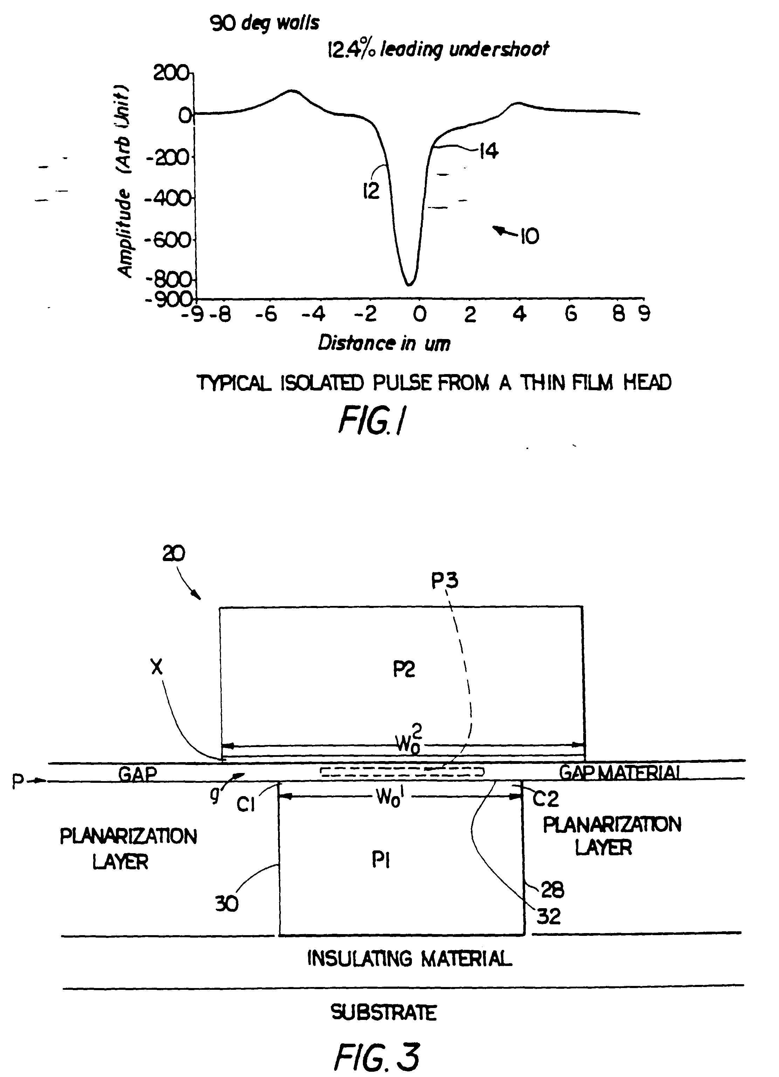

A typical waveform generated by a thin film magnetic recording head reading a transition from a magnetic medium is shown in the graphical representation of Fig. 1. It will be noted that pulse 10 is defined by a leading half 12 and a trailing half 14, which are not exactly alike. This asymmetry contributes to the variable peak shifts which normally occur when reading a series of transitions from a medium. If the transverse components of waveforms arising from transverse recording were substantially reduced, then the asymmetry and the variability in the peak shifts would be minimized accompanied by an attendant increase in window margin.

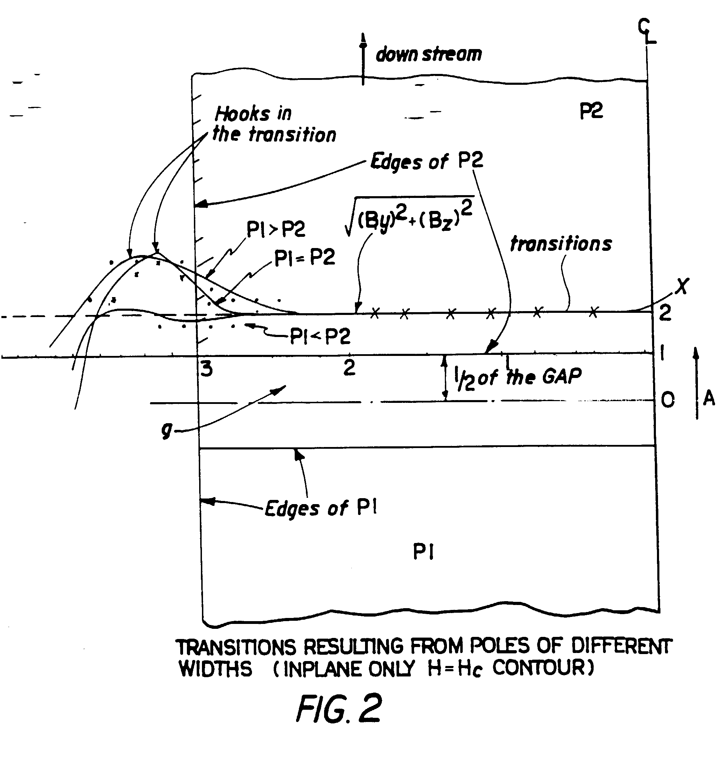

Turning now to Fig. 2, which is a graphical representation of a transition from each of three recording head pole tip geometries (the first pole greater than, equal to, and less than the second pole), the ill effects of transverse field components upon recording will be described. Upon this graph is superimposed the projection of a magnetic head having two equal width poles, P1 and P2, where adjacent portions of the P1 and P2 pole tips are shown defining gap g. In Fig. 2, distance along the track is shown in an arbitrary scale on the X-axis, while location of a transition relative to location of the gap is also shown in an arbitrary scale on the Y-axis. Furthermore, for each pole tip geometry, only the contour along which the effective in-plane head field equals the coercivity of the medium is shown, which is the active recording region of the head during the write cycle. Also shown is an arrow A which indicates the direction of medium movement, and a center line indication on the right hand vertical axis which signifies that only one half of the transition and the recording head are shown in this figure.

When the width of the P2 pole at the air bearing surface is equal to or less than that of P1, the magnitude of the transverse components of the head field are about the same as or are larger than that of the longitudinal components at the fringe zones. Hence, the vectorial sum of these components at the fringe zones will be at the level of the recording medium coercivity further downstream than at the center of the poles. Therefore, the recorded transition will be imparted with hooks at the fringe zones which will interact with the previously recorded bit, causing nonlinear inter-symbol interference at high bit densities. These hooks can be about 1.5 micron wide on either side of the pole edges and can penetrate about 0.3 microns downstream, depending upon the field produced by the head. As the write current through the head is increased, the head field influencing the medium increases proportionately and the hooks become more prominent. Therefore, at high bit densities, this nonlinear interference between closely recorded bits causes a reduction of readback amplitude as the write current is increased, a phenomenon which we define as "peakiness."

It will be appreciated that the transverse component of the head field has an asymmetrical distribution along the direction of media motion. Thus, if the transverse head field along one pole is considered as being positive, then the transverse head field along the other pole will be negative. By the principle of reciprocity, it can be shown that the resulting transverse readback waveform is also asymmetrical. This transverse readback waveform is of opposite sign to the longitudinal readback waveform during the leading portion 12 of the central pulse 10 of Fig. 1; it is of the same sign as the longitudinal readback waveform during the trailing portion 14 of Fig. 1. This is a result of the transverse head field during readback near pole P1 being in a direction opposite to the direction of the transverse orientation of the medium magnetization which has been determined during writing by pole P2. Hence, the leading position's "20%-90%" rise time of the resulting readback pulse is reduced, while the trailing portion's "90%-to-20%" fall time is increased, because of the asymmetry in the transverse component of the readback waveform.

When the width of the P2 pole at the air bearing surface is equal to or less than that of P1, the vertical component of the head field is typically about two times the coercivity in the recording zone and the resultant head field is about 60° out-of-plane. When the head field is greater than about 45° or 50° out-of-plane, then the in-plane switching field of high coercivity media is reduced. As a result, the longitudinal dimension of the recorded transition is increased which leads to wider pulse widths and lower high frequency amplitudes. Again, as the write current though the head is increased, the vertical field increases, thus causing further degradation of high frequency readback amplitude, i.e., an increase in peakiness.

When the P2 pole is wider than the P1 pole, such as by a few microns, the transverse fields at the fringe zones are reduced, perhaps by 35% in magnitude compared to the above configurations, and also the non-parallel contours of the longitudinal component of the head field become parallel to the gap at the fringe zone. This favorable field distribution eliminates the hooks in the transition, since the transition is now essentially parallel to the gap at all points. A straight transition prevents the nonlinear interference of the current transition with the previous one during the writing cycle, also reducing peakiness.

Such a configuration of poles substantially reduces asymmetry in the resulting readback waveforms by substantially reducing the transverse component during recording when the cross-section of pole P2 is wider than that of P1. Hence, the readback waveform is symmetrical and the magnitudes of the rise and fall times become nearly identical. This symmetry will result in a reduction of peak shift variability.

Such a configuration of poles also reduces the vertical field at the recording zone such that the resultant head field is less than 50° out-of-plane. As a result, high coercivity media do not suffer any degradation in the magnitude of their in-plane switching field. Therefore, the high frequency readback amplitude remains almost constant with an increase in write current, thus minimizing peakiness.

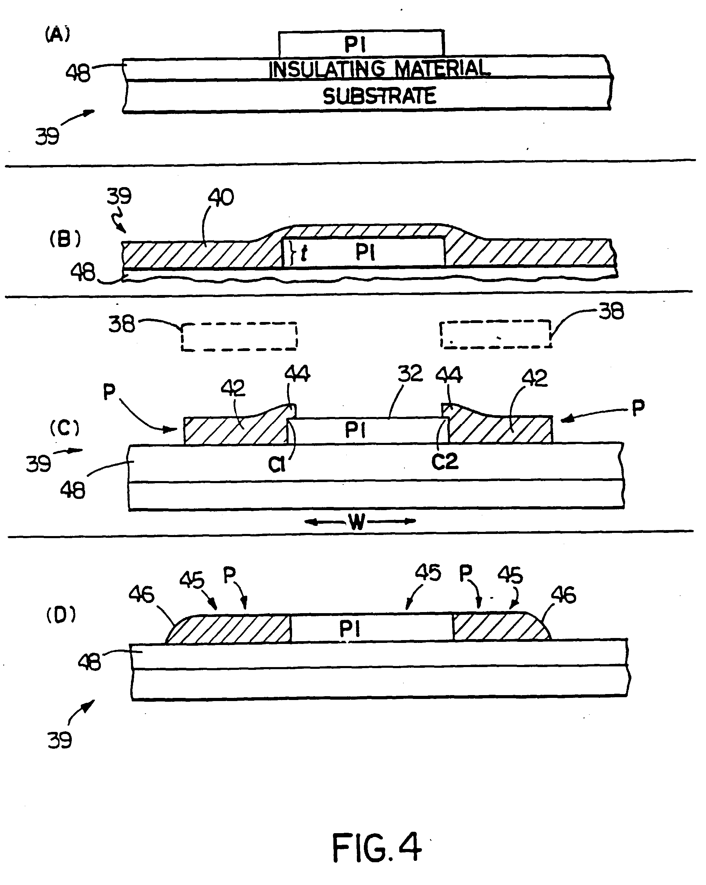

Turning now to Fig. 3, which is a cross-sectional schematic view of the pole tips of a preferred recording head 20 of the present invention, it will be appreciated that a geometry is shown where the tip of pole P2 is wider than that of P1 near the gap. In particular, poles P1 and P2 define a gap g, where the width W²₀ of the P2 pole at the gap is preferably one or more microns wider than the width W¹₀ of the P1 pole at the gap. The additional width of pole P2 over pole P1 at the gap ensures that the transverse component of the head field at the recording zone is minimized. Hence, the medium is essentially magnetized in the longitudinal direction. The write fringing of such a head design is approximately 0.25 microns smaller than that which occurs from a head where the P1 pole is wider than the P2 pole at the gap. We speculate that, for a given track pitch, the width of the P2 pole can be increased slightly, which produces a larger readback signal, thus improving the signal-to-noise ratio of the recording system.

In an alternative configuration of the present invention, a third pole piece P3 may be formed as part of head 20, embedded within the gap layer g. This third head is indicated by the dotted outline within gap layer g as shown in Fig. 3. The third pole piece at its tip is preferably configured to be both thin, less wide than pole P2, and magnetically saturable. It will be appreciated by those skilled in the art that this saturation property can be selectively used by applying appropriate energization to the coil structure at the yoke, whereby the third pole is effectively inoperative during the write cycle. During the read cycle, the third pole is not saturated and effectively dominates reading such that a sharp transition waveform will result.

In known processes for making thin film heads, an insulating base layer of, for example A1₂O₃, is deposited on a ceramic substrate, such as 3M's ALSIMAG 204. A sputtered seed layer, such as NiFe, is applied over this insulating base layer (perhaps employing a metallic adhesion layer). Photoresist is then spun over the seed layer and a pole piece pattern is formed buy a photolithographic process. After the resist is developed to form a mask, the first pole piece is plated through the mask. After this plating process is completed (including removing the mask, etching to exposed underlying seed and adhesion layers, remasking the first pole piece, and then etching the plated areas of the pole), a gap layer, such as SiO₂ or A12O₃, is deposited thereon. However, this gap layer does not always adequately cover the P1 pole corners C1 and C2 defined by where the P1 pole top surface 32 meets the side walls 28 and 30, due to the abrupt change in topography at these sidewalls.

In the next steps, a coil structure is formed over the yoke with intermediate layers of insulation, and the second pole piece is formed over this coil structure and the gap layer. During these steps, a considerable thinning of the gap layer occurs, and it can become completely depleted at corners C1 and C2. During plating of the second pole piece, the width of the second pole at its tip is customarily plated to be narrower than the width of the first pole at its tip, in order to allow for microlithographic misalignment tolerances and perhaps also to avoid magnetic shorts occurring between the two poles at junctures C1 and C2 where the gap layer has thinned.

In practice of the present invention, the step at which the gap layer is deposited onto the P1 pole piece is preceded with a planarization process. This planarization involves forming a layer of non-magnetic material adjacent to the P1 pole on either side such that there is a uniform base on which the gap layer will be deposited. Hence, as shown in Fig. 3, the planarization layer assumes the same upper plane P as does the upper surface of pole P1.

A misaligned P2 pole can hang over the edge of P1 pole, which can result in head pulse asymmetry and peak shift, in addition to increasing the likelihood of pole to pole shorting at the corners C1, C2 of the P1 pole. With a planarized P1 pole, such misalignment will not produce these negative effects, and in addition, present alignment/registration tolerances are relieved. As a result, in addition to the traditional P2 width less than P1 width configuration, it is now possible to conveniently produce magnetic heads where the P2 width is equal to or greater than the P1 width.

An additional benefit of planarization is that it improves uniformity of the gap layer atop pole P1 because of a more consistent angle of incidence of the pole surface with respect to the deposition stream. Hence, planarization should result in greater uniformity of gap layer coverage of the P1 pole especially at the pole tip edges. Also, erosion problems associated with topography, and changes in topography, are reduced or eliminated, since the erosion rate over a planar surface tends to be uniform, while the erosion rate at step edges tends to be accelerated.

Planarization also reduces lithographic complexity in the pole tip region. In practice of the present invention, it is therefore possible to present a plateau, rather than a valley/mesa combination with step edges, upon which subsequent structures can be deposited/exposed/developed. This improves critical dimension control by eliminating stray reflections off the step edges and allows generation of more vertically walled P2 poles.

As a result of the planarization layer, the gap layer assumes a uniform thickness over the entire P1 top surface, and if thinning occurs it does so uniformly over the entire gap layer during the successive steps of the process described above. The width of the second pole piece P2 then becomes independent of the width of pole P1, where the planarized gap layer is at least as wide as the overlaid P2 pole. Hence, when pole piece P2 is plated to be wider than or approximately equal to pole piece P1, no magnetic shorting occurs at the gap.

A preferred embodiment of the photoplanarization process is described with respect of FIGS. 4A-4D. In FIG. 4A, a P1 pole is shown on an insulating layer 48 upon a wafer 39 in practice of conventional process technology. In FIG. 4B, a positive photoresist (e.g. AZ1375) is spun on top of workpiece 39 of FIG. 4A, for example, at approximately 4,000 rpm in the case of a 3.0 micron thick P1 pole. The resist viscosity and spin speed affect the spun film thickness, and should be adjusted according to pole thickness t. Photoresist 40 will settle on and over the P1 pole and will assume approximately the configuration (in cross-section) as shown in FIG. 4B.

In the next step, photoresist 40 is pattern-wise exposed and developed as is well known to those practiced in microlithography using a photoresist border pattern mask 38 (shown in dotted outline in FIG. 4C). By virtue of this process, a resist border 42 is retained around the P1 pole, or at least at the pole tip region, after exposure and development. Border 42 overlaps the P1 pole in the track width direction W, ultimately to insure a smooth transition from the pole top surface 32 to the planarized plateau P after further processing. As a result of the slight overlap of border 42, a raised portion of photoresist 40 will remain on top of pole P1 after developing, as indicated in Fig. 4C by the slight shoulders 44 overriding the corners C1 and C2 of pole P1. Preferably each resist shoulder will overlap pole P1 by approximately one-quarter to one-half micron.

Photoresist 40 remaining on workpiece 39 is hard-baked thereafter. In this process, the resist will undergo thermal flow and cross-linking, and shoulders 44 atop the P1 pole corners C1, C2 will thin out by means of surface tension in the polymer as it passes the glass transition point. The result is a rather smooth-surfaced, chemically resistant plateau P. This plateau P, acting in concert with the top surface 32 of pole P1, yields substantially flat areas 45 and terminates with smoothly downward sloped outer walls 46 which merge with insulating base layer 48, as seen in FIG. 4D. (This provides a substantially flat workpiece, however, a slight elevation may be experienced at the point where the photoresist meets flat area 45.) This structure is suitable for further processing, such as gap layer deposition and plating of pole P2 (less than, equal to or wider than pole P1). In alternative embodiments, however, it may be desirable to lap the planarized surface P before further processing.

Hard-baking of photoresist 40 is preferably performed at 265°C, under vacuum with 10 cubic feet per hour nitrogen backfill. A magnetic field may also be applied during this process to effect desired anisotropic magnetic pole performance characteristics.

Referring again to the spun on photoresist, it is noted that too low a spin speed will result in minor smooth hard-baked photoresist "ears" at the edges of the P1 pole. This will provide a slightly thicker gap locally. Too high a spin speed will have less of an effect, but will result in sloping down of the entire planarized surface as it extends away from pole P1 and will result in a sloping down of pole P2 formed thereover.

Alternative process steps may be followed in practice of the above photoplanarization invention. For example, polyimide has advantages over hard-baked photoresist in that it is less brittle, mechanically strong and highly chemically resistant.
These properties are advantageous for a material which in the pole tip region would be submitted to mechanical processing and solvent cleaning. The disadvantages of polyimide, however, are that the material does not round the flow as well as photoresist, and additional process steps and final cure temperatures greater than 350° are required to fully imidize the polymer. This latter constraint may be mitigated by curing in an orienting magnetic field.

In one alternative process, a polyimide coating of a thickness equal to or slightly greater than the P1 pole piece thickness is spun onto the wafer and is partially cured. Positive resist is then spun onto the wafer and patterned using a mask similar to that described above. The polyimide is then patterned (in the partially cured state) via the positive resist using a hydroxide-based developer.

The wafer is then polished. For example, it can be inverted on a one-half micron (or less) grit, mylar mounted, fixed particle abrasive polishing media, and then the wafer is slightly pulled across the polishing media to remove excess resist from the top surface of the pole piece. A low amount of force is required to remove the soft-baked resist. Surface scratching should be avoided by using low polishing forces in low grit size, although the actual process may include a rough polish followed by polishing steps using increasingly finer grit size.

In the next step, the polyimide is fully cured at 350°C.

In the processes described above, any positive acting photoresist may be used, such as AZ-1375, diazide sensitizer, phenolic resin, etc. The resist used will depend upon the pole thickness to be planarized. Resists are available in different viscosity ranges, which will affect coating thickness. The spin coating speed will also depend upon resist type and desired thickness. In our experience, we have found that coating thickness resulting on the wafer should be approximately 20% to 30% greater than the pole thickness being planarized in order to allow for volume shrinkage which will occur from hard baking. Also, after spin coating, a soft bake at 90°C for 30 minutes is preferably performed to drive off resist coating solvents, which is a standard process procedure.

As a result of the foregoing, conventional thin film head fabrication may be modified to provide an inexpensive, quick and high yield process for generation of magnetic thin film heads not otherwise practically possible heretofore. Thus, new configurations of the P2 pole equal to and wider than the P1 pole can be conveniently achieved.

The configuration of the pole tips in practice of the present invention can be of any desired combination. For example, a substantially rectangular portion adjacent to the gap and a substantially trapezoidal portion adjacent to the rectangular portion can be defined in either or both of the pole tips, in order to minimize undershoots that result in the readback waveforms from thin film heads.

## Claims

1. A method for forming a thin film head that comprises at least two pole structures separated by a gap section, the steps comprising:
(a) disposing a levelling material (40) adjacent to and partially over an upper surface (32) of a tip (P1) of a first of said pole structures;
(b) forming a planarizing layer (P) adjacent to said tip (P1) of said first of pole structures, from the levelling material (40), by hard baking the levelling material (40) to cause thermal flow of that the portion (44) of the levelling material (40) that is disposed partially over said upper surface (32) such that the planarizing layer (P) defines a uniform planar area (45) comprising an upper surface (32) of the tip (P1) of the first of the pole structures and an upper surface of the planarizing layer (P);
(c) forming the gap section (g) upon the uniform planar area (45); and
(d) forming a tip (P2) of a second of the pole structures upon the gap section (g).

2. The method of claim 1 wherein the step of forming a planarizing layer (P) includes the further step of additionally lapping the levelling material (40) to assist in formation of said uniform planar area (45).

3. The method of claim 1 or claim 2 wherein said tip (P2) of said second of said pole structures is equal in width to, or wider than said tip (P1) of said first of said pole structures.

4. The method of claim 3 wherein the levelling material is comprised of photoresist.

5. The method of claim 3 wherein the planarizing layer is comprised of polyimide.

6. The method of claim 5 wherein step (a) comprises coating the workpiece on which said first of said pole structures (P1) rests and the upper surface (32) of the first of said pole structures (P1) with said polyimide, patterning said polyimide and baking said polyimide.

7. The method of claim 4 wherein step (a) comprises coating the workpiece on which said first of said pole structures (P1) rests and the upper surface (32) of the first of said pole structures (P1) with said photoresist, patterning said photoresist with a resist border mask (38) to result in a photoresist border (42) remaining over a portion (C1, C2) of the upper surface (32) of the first magnetic pole tip structure (P1) after exposure and development of the photoresist (40).

8. The method of claim 7 wherein the border mask (38) has inner dimensions that are slightly smaller than dimensions of the upper surface (32) of the first magnetic pole tip structure (P1).

9. The method of claim 5 wherein the photoresist border (42) forms a shoulder (44) over edges of the upper surface (32) of the first magnetic pole tip structure (P1).

10. The method of claim 4 wherein the photoresist (40) is hard-baked at a temperature of approximately 265° C.

11. The method of claim 5 wherein the polyimide (40) is hard-baked at a temperature of approximately 350° C.

12. The method of claim 10 or claim 11 wherein the step of baking the levelling material (40) is performed in presence of a vacuum with a nitrogen backfill and in presence of a magnetic field.

13. A method of claim 6 or claim 7 wherein the step of patterning the levelling material results in the levelling material (40) overlapping edges (C1,C2) of the upper surface (32) of the first magnetic pole tip structure (P1) by approximately one-quarter to one-half micron.

## Patentansprüche

1. Verfahren zum Herstellen eines Dünnfilmkopfes, der wenigstens zwei Polstrukturen umfaßt, die durch einen Spaltabschnitt getrennt sind, wobei die Schritte umfassen:
(a) Anordnen eines Nivelliermaterials (40) neben und teilweise über einer Oberfläche (32) einer Spitze (P1) einer ersten der Polstrukturen,
(b) Bilden einer Planarschicht (P) neben der Spitze (P1) der ersten der Polstrukturen von dem Nivelliermaterial (40) durch Hartsintern oder -backen des Nivelliermaterials (40), damit ein thermisches Fließen von dem Teil (44) des Nivelliermaterials (40) verursacht wird, der teilweise über der Oberfläche (32) angeordnet ist, derart, daß die Planarschicht (P) einen gleichmäßigen Planarbereich (45) mit einer Oberfläche (32) der Spitze (P1) der ersten der Polstrukturen und einer Oberseite der Planarschicht (P) definiert,
(c) Bilden des Spaltabschnittes (g) auf dem gleichmäßigen planaren Bereich (45) und
(d) Bilden einer Spitze (P2) einer zweiten der Polstrukturen auf dem Spaltabschnitt (g).

2. Verfahren nach Anspruch 1, bei dem der Schritt des Bildens einer Planarschicht (P) den weiteren Schritt eines zusätzlichen Läppens des Nivelliermaterials (40) umfaßt, um die Bildung des gleichmäßigen planaren Bereiches (45) zu unterstützen.

3. Verfahren nach Anspruch 1 oder 2, bei dem die Spitze (P2) der zweiten der Polstrukturen in der Breite gleich oder weiter als die Spitze (P1) der ersten der Polstrukturen ist.

4. Verfahren nach Anspruch 3, bei dem das Nivelliermaterial ein Photoresist umfaßt.

5. Verfahren nach Anspruch 3, bei dem Planarschicht aus Polyimid besteht.

6. Verfahren nach Anspruch 5, bei dem ein Schritt (a) ein Beschichten des Werkstückes, auf dem die erste der Polstrukturen (P1) verbleibt, und der Oberfläche (32) der ersten der Polstrukturen (P1) mit dem Polyimid, ein Musterbilden des Polyimids und ein Sintern des Polyimids umfaßt.

7. Verfahren nach Anspruch 4, bei dem ein Schritt (a) ein Beschichten des Werkstückes, auf dem die erste der Polstrukturen (P1) verbleibt, und der Oberfläche (32) der ersten der Polstrukturen (P1) mit dem Photoresist, ein Musterbilden des Photoresists mit einer Resistgrenzmaske (38), um in einer Photoresistgrenze (42) zu resultieren, die über einem Teil (C1, C2) der Oberfläche (32) der ersten Magnetpol-Spitzenstruktur (P1) nach Belichtung und Entwicklung des Photoresists (40) verbleibt, umfaßt.

8. Verfahren nach Anspruch 7, bei dem die Grenzmaske innere Dimensionen hat, die etwas kleiner als die Dimensionen der Oberfläche (32) der ersten Magnetpol-Spitzenstruktur (P1) sind.

9. Verfahren nach Anspruch 5, bei dem die Photoresistgrenze (42) eine Schulter (44) über Rändern der Oberfläche (32) der ersten Magnetpol-Spitzenstruktur (P1) bildet.

10. Verfahren nach Anspruch 4, bei dem das Photoresist (40) bei einer Temperatur von ungefähr 265°C hartgesintert ist.

11. Verfahren nach Anspruch 5, bei dem das Polyimid (40) bei einer Temperatur von etwa 350°C hartgesintert ist.

12. Verfahren nach Anspruch 10 oder 11, bei dem der Schritt des Sinterns des Nivelliermaterials (40) bei Vorliegen eines Vakuums mit einer Stickstoffauffüllung und bei Vorliegen eines Magnetfeldes durchgeführt wird.

13. Verfahren nach Anspruch 6 oder 7, bei dem der Schritt der Musterbildung des Nivelliermaterials darin resultiert, daß das Nivelliermaterial (40) Ränder (C1, C2) der Oberfläche (32) der ersten Magnetpol-Spitzenstruktur (P1) um etwa ein viertel bis ein halbes Mikron überlappt.

## Revendications

1. Procédé pour former une tête à film mince qui comporte au moins deux structures polaires séparées par un tronçon d'entrefer, comportant les étapes consistant à :
(a) disposer un matériau de nivellement (40) adjacent à une surface supérieure (32), et partiellement au-dessus de celle-ci, d'une pastille (P1) d'une première desdites structures polaires,
(b) former une couche de finition plane (P) adjacente à ladite pastille (P1) de ladite première des structures polaires, à partir du matériau de nivellement (40), en faisant durcir par cuisson le matériau de nivellement (10) pour entraîner un écoulement thermique de la partie (44) du matériau de nivellement (40) qui est disposée partiellement au-dessus de ladite surface supérieure (32) de sorte que la couche de finition plane (P) définit une zone plane uniforme (45) comportant une surface supérieure (32) de la pastille (P1) de la première des structures polaires et une surface supérieure de la couche de finition plane (P)
(c) former le tronçon d'entrefer (g) sur la zone plane uniforme (45), et
(d) former une pastille (P2) d'une seconde des structures polaires, sur le tronçon d'entrefer (g).

2. Procédé selon la revendication 1, dans lequel l'étape consistant à former une couche de finition plane (P) comporte en outre l'étape consistant en outre à roder le matériau de nivellement (40) pour aider à la formation de ladite zone plane uniforme (45).

3. Procédé selon la revendication 1 ou 2, dans lequel ladite pastille (P2) de ladite seconde desdites structures polaires a une largeur égale à celle de ladite pastille (P1) de ladite première desdites structures polaires, ou est plus large que celle-ci.

4. Procédé selon la revendication 3, dans lequel le matériau de nivellement est constitué d'un matériau photorésistant.

5. Procédé selon la revendication 3, dans lequel la couche de finition plane est constituée de polyimide.

6. Procédé selon la revendication 5, dans lequel l'étape (a) consiste à revêtir la pièce sur laquelle ladite première desdites structures polaires (P1) est en appui et la surface supérieure (32) de la première desdites structures polaires (P1) à l'aide dudit polyimide, configurer ledit polyimide et cuire ledit polyimide.

7. Procédé selon la revendication 4 dans lequel l'étape (a) consiste à revêtir la pièce sur laquelle ladite première desdites structures polaires (P1) est en appui et la surface supérieure (32) de la première desdites structures polaires (P1) à l'aide dudit matériau photorésistant, configurer ledit matériau photorésistant à l'aide d'un masque (38) formant cadre résistant pour qu'en résultat un cadre photorésistant (42) reste sur une partie (C1, C2) de la surface supérieure (32) de la première structure (P1) formant pastille polaire magnétique après exposition et développement du matériau photorésistant (40).

8. Procédé selon la revendication 7, dans lequel le masque (38) formant cadre a des dimensions intérieures qui sont légèrement plus petites que les dimensions de la surface supérieure (32) de la première structure (P1) formant pastille polaire magnétique.

9. Procédé selon la revendication 5, dans lequel le cadre photorésistant (42) forme un épaulement (44) par-dessus les bords de la surface supérieure (32) de la première structure (P1) formant pastille polaire magnétique.

10. Procédé selon la revendication 4, dans lequel le matériau photorésistant (40) est durci par cuisson à une température d'approximativement 265°C.

11. Procédé selon la revendication 5, dans lequel le polyimide (40) est durci par cuisson à une température d'approximativement 350°C.

12. Procédé selon la revendication 10 ou 11, dans lequel l'étape consistant à cuire le matériau de nivellement (40) est réalisée en présence de vide, avec une charge d'azote et en présence d'un champ magnétique.

13. Procédé selon la revendication 6 ou 7, dans lequel l'étape consistant à configurer le matériau de nivellement a pour résultat le fait que le matériau de nivellement (40) recouvre les bords (C1, C2) de la surface supérieure (32) de la première structure (P1) formant pastille polaire magnétique sur approximativement un quart à un demi micron.
